# EUROPEAN PATENT APPLICATION

(11) **EP 4 252 908 A1**
(43) Date of publication of application: **04.10.2023**
(21) Application number: 21903799.1
(22) Date of filing: 07.12.2021
(51) Int. Cl.: B01L 3/02

(54) **ADAPTER FOR MOUNTING CONDUCTIVE PIPETTE, SAMPLE TUBE OPENING/CLOSING DEVICE, AND AUTOMATIC SAMPLE ANALYSIS SYSTEM**

(30) Priority: 07.12.2020 KR 20200169361
(71) Applicant: Bioneer Corporation, Daejeon 34302 (KR)
(72) Inventor: PARK, Han Oh, Sejong 30151 (KR); PARK, Hanee, Daejeon 35251 (KR); KIM, Jong Kab, Daejeon 34008 (KR); IM, Dae Seong, Daejeon 34010 (KR); KWON, Eun Yeong, Daejeon 35231 (KR)
(74) Representative: ABG Intellectual Property Law, S.L.
(86) International application number: PCT/KR2021/018433
(87) International publication number: WO 2022/124753

(57) **Abstract**

The present invention relates to an adapter for mounting a conductive pipette, a sample tube opening/closing device, and an automatic sample analysis system and, more specifically, to an adapter for mounting a conductive pipette, a sample tube opening/closing device, and an automatic sample analysis system, in which dispensing of a liquid sample and extraction, amplification and testing of nucleic acids are integrally carried out.

In the present invention, disclosed is a sample tube opening/closing device comprising: a housing (110) that forms an inner space isolated from the outside and includes a door (120) for carrying in/out a multi-well plate (20) for biological samples, including a plurality of sample tubes (10) in which biological samples are accommodated; and a sample tube opening/closing part that is installed in the inner space to be spaced apart from the multi-well plate (20) for biological samples and automatically opens and closes the sample tubes (10).

## Description

### TECHNICAL FIELD

The present invention relates to an adapter for mounting a conductive pipette, a sample tube opening/closing device, and an automatic sample analysis system and, more specifically, to an adapter for mounting a conductive pipette, a sample tube opening/closing device, and an automatic sample analysis system, in which dispensing of a liquid sample and extraction, amplification and testing of nucleic acids are integrally carried out.

### BACKGROUND ART

Gene amplification testing, as an in vitro diagnostic testing (IVD testing) technology which amplifies a gene of a specific sequence to determine the presence or absence of a gene, is used in various fields such as food testing and GMO testing as well as pathogenic microorganism testing and genotyping testing of various animals and plants, including humans.

In order to perform accurate gene amplification testing from various biological samples, first, a nucleic acid extraction process is required to remove, from a sample, various reaction inhibitors which are included in the sample and which inhibit a gene amplification reaction, and to acquire a high-purity target nucleic acid.

The target nucleic acid thus extracted is mixed with a gene amplification solution to cause a gene amplification reaction, and then gene amplification testing is completed by confirming DNA corresponding to the length of the DNA of a gene amplification product or confirming fluorescence generated from the gene amplification product.

More specifically, gene amplification testing is a method for amplifying a target nucleic acid, and various methods such as PCR, nested PCR, RT/PCR, and isothermal nucleic acid amplification have been developed, and this method may generally include a preparation step of preparing a gene amplification reaction product by mixing an extracted target nucleic acid with a gene amplification reaction solution and a reaction step of proceeding a reaction.

Conventionally, a dispensing device for dispensing a biological sample, a purification and extraction device for purifying and extracting a target material from a dispensed biological sample, and an amplification testing device for amplifying and measuring an extracted target material were separated, and dispensing, extraction, and amplification were performed respectively and individually.

In this case, there is a problem in that the time taken from dispensing to testing through amplification increases to make rapid testing difficult and cause exposure to contaminants during a transfer process.

In addition, in the case of a dispensing device for biological samples, conventionally, a sample was dispensed by supplying a biological sample-containing sample tube through a tray in an open state, but in this process, there are problems in that pathogens included in the biological sample are exposed to a user or the biological sample is contaminated.

Moreover, a lot of time is consumed in injecting a plurality of biological samples from a sample container into an extraction multi-well plate, and thus there is a problem in performing testing quickly or performing multiple kinds of testing simultaneously.

Furthermore, when a conventional conductive pipette is mounted, there are problems in that precise mounting is not achieved or internal samples or solutions leak due to the existence of tolerances and irregular tolerances of an injection tip for manufacturing the conductive pipette.

### DISCLOSURE OF THE INVENTION

### TECHNICAL PROBLEM

To solve the problems, the present invention provides an adapter for mounting a conductive pipette, a sample tube opening/closing device, and an automatic sample analysis system, in which a specimen container is opened and closed inside the equipment to eliminate the risk of infection for users and prevent contamination, and opening and closing a cap of a sample tube and dispensing, extraction and purification, and amplification testing are performed continuously, quickly, and automatically so as to drastically reduce the time required for dispensing biological samples.

### TECHNICAL SOLUTION

In accordance with an embodiment of the present invention, disclosed is a sample tube opening/closing device including: a housing 110 that forms an inner space isolated from the outside and includes a door 120 for carrying in/out a multi-well plate 20 for biological samples, including a plurality of sample tubes 10 in which biological samples are accommodated; and a sample tube opening/closing part that is installed in the inner space to be spaced apart from the multi-well plate 20 for biological samples and automatically opens and closes the sample tubes 10.

The sample tube opening/closing part may include: one or more lower grippers 200 for gripping a lower portion of the sample tubes 10; and one or more upper grippers 300 for gripping an upper portion of the sample tubes 10.

Three of the lower grippers 200 and three of the upper grippers 300 may be provided corresponding to each other in parallel so that three of the sample tubes 10 are simultaneously opened or closed.

The upper grippers 300 may be each independently linearly movable in an X direction, a Y direction, or a Z direction.

The upper grippers 300 may include: an upper gripping part 310 for gripping an upper portion of the sample tubes 10; an upper gripper forward/backward driving part 320 for moving the upper gripping part 310 in the forward/backward direction, which is a process processing direction; an upper gripper left/right driving part 330 for moving the upper gripping part 310 in the left/right direction with respect to the process processing direction; and an upper gripper upward/downward driving part 340 for moving the upper gripping part 310 in the upward/downward direction.

In a state in which the lower grippers 300 grip a lower portion of the sample tubes 10, the upper grippers 200 may grip and lift a sealing member 12 sealing the sample tubes 10, thereby opening the sample tubes 10.

In a state in which the upper grippers 200 grip the sealing member 12 sealing the sample tubes 10 and the lower grippers 300 grip a lower portion of the sample tubes 10, the sample tubes 10 may be opened through relative rotation of the upper grippers 200 and the lower grippers 300.

The lower grippers 200 may include: a lower gripping part 210 on which the sample tubes 10 are seated and which grips a lower portion of the sample tubes 10; and a lower gripper rotation driving part 220 which rotates the lower gripping part 210 about an axis of an imaginary center line passing through the center of the sample tubes 10 in the vertical direction.

The lower grippers 200 may include an identification code recognition part 230 disposed adjacent to the lower gripping part 210 and identifying the biological samples by recognizing an identification code 13 attached to the sample tubes 10.

The housing 110 may include a UV lamp part 130 provided on at least one of the lower surface of the inner space S and an upper portion of the door 120.

The housing 110 may include an ozone sensor 140 installed in the inner space S to detect ozone generated by the UV lamp part 130.

The housing 110 may include a negative pressure forming part 150 for performing exhaust in one direction from the inner space S to an outer space so that the inner space S is maintained in a negative pressure state.

The negative pressure forming part 150 may include: a discharge fan 151 provided on one side surface of the housing 110 to discharge air from the inner space S; and an ozone filter 152 provided in front of the discharge fan 151 to filter ozone present in the inner space S.

In accordance with another embodiment of the present invention, disclosed is automatic sample analysis system including: a sample tube opening/closing device for automatically opening and closing a sealing member 12 of sample tubes 10 including biological samples; a dispensing device 1 for dispensing the biological samples from the sample tubes 10; an automatic purification and extraction device 2 for purifying and extracting a target substance from the biological samples acquired from the dispensing device 1; and a nucleic acid amplification testing device 3 for amplifying and measuring the target substance acquired from the automatic purification and extraction device 2.

The sample tube opening/closing device, the dispensing device 1, and the automatic purification and extraction device 2 may form a first inner space S1 isolated from the outside, the nucleic acid amplification testing device 3 may form a second inner space S2 isolated from the outside, and the first inner space S1 and the second inner space S2 are in communication with each other.

The target substance may be a target nucleic acid included in the biological samples, and quantitative or qualitative testing may be performed by amplifying the target nucleic acid.

The target nucleic acid may be a nucleic acid of an antigen-nucleic acid conjugate or an aptamer nucleic acid, which is, among an antigen or antibody included in the biological samples, selectively attached to the antigen or antibody.

Quantitative or qualitative testing may be simultaneously performed on each of a nucleic acid, antigen, and antibody included in the biological samples.

The dispensing device 1, the automatic purification and extraction device 2, and the nucleic acid amplification testing device 3 may be respectively provided with doors that are separated and distinguished from each other.

The dispensing device 1 may include a biological sample dispensing part 400 which suctions biological samples in the sample tubes 10 located in the sample tube opening/closing part and dispenses the biological samples to a dispensing multi-well plate 30, while moving between the sample tube opening/closing part, a pipette tip rack 80, and the dispensing multi-well plate 30.

The biological sample dispensing part 400 may include: a dispensing pipette 410 for suctioning the biological samples in the sample tubes 10 and dispensing the suctioned biological samples to the dispensing multi-well plate 30; a dispensing pipette sensor part 420 for controlling the suction and dispensing amounts of the biological samples by the dispensing pipette 410; and a dispensing pipette driving part 430 for driving the dispensing pipette 410 to move between the dispensing multi-well plate 30 and the sample tubes 10 located in the first inner space.

The dispensing pipette sensor part 420 may include a pressure sensor 421 for measuring the degree of pressure to detect clogging of the dispensing pipette 410.

The dispensing pipette sensor part 420 may include a level sensor 422 mounted to the dispensing pipette 410 and detecting contact of a dispensing pipette tip 411, in which the biological samples are accommodated, with the liquid surfaces of the biological samples.

The nucleic acid amplification testing device 3 may include: a testing housing which forms a testing space isolated from the outside; and a multi-well plate insertion part into which a multi-well plate having a plurality of reaction tubes accommodating target substances extracted through the automatic purification and extraction device 2 is inserted.

The multi-well plate insertion part may include a support part for supporting an edge of the multi-well plate where the plurality of reaction tubes are provided, and a multi-well plate driving part for driving the support part between a dispensing position of the automatic purification and extraction device 3 and an amplification position in the testing housing.

The testing housing may be provided with a shutter for carrying in/out of the multi-well plate insertion part.

In accordance with another embodiment of the present invention, disclosed is an adapter which is for mounting a conductive pipette, and is for connecting a conductive pipette tip 1000 to a pipette device 1100, the adapter including: a cylinder body 1200 coupled to the pipette device 1100; and a columnar plate spring part 1300 which is coupled to the outer circumferential surface of the cylinder body 1200 and to which the conductive pipette tip 1000 is fitted and coupled.

The cylinder body 1200 and the plate spring part 1300 may be formed of metal and conductive polymers.

The cylinder body 1200 may include an upper coupling part 1210 inserted into and coupled to the pipette device 1100, a lower coupling part 1220 exposed to the outside and connected to the conductive pipette tip 1000, and a central part 1230 connected between the upper coupling part 1210 and the lower coupling part 1220 and formed to have a smaller radius than the upper coupling part 1210 and the lower coupling part 1220.

The upper coupling part 1210 may include a first upper stepped part 1211 formed at the upper end thereof and a second upper stepped part 1212 extending from the lower side of the first upper stepped part 1211 and formed to have a smaller radius than the first upper stepped part 1211.

The lower coupling part 1220 may include a plurality of lower stepped parts 1221 formed spaced apart from each other at regular intervals.

An elastic member 1400 installed at the lower stepped parts 1221 to prevent leakage of a solution in the conductive pipette tip 1000 may be further included.

The plate spring part 1300 may include an annular part 1310 coupled to the upper coupling part 1210 side and a plurality of blade parts 1320 having elasticity and provided downward along the annular part 1310.

In the plate spring part 1300, the annular part 1310 may be installed on the outer circumferential surface of the second upper stepped part 1212 so that deformation caused by elasticity according to the coupling of the conductive pipette tip 1000 is possible, as the blade parts 1320 are installed spaced apart from the outer circumferential surface of the central part 1230.

The plate spring part 1300 may have one end in contact with a PCB part 1500 installed in the pipette device 1100 to check energization, and the other end connected to the conductive pipette tip 1000.

### ADVANTAGEOUS EFFECTS

An adapter for mounting a conductive pipette, a sample tube opening/closing device, and an automatic sample analysis system according to the present invention have advantages in that dispensing, extraction and purification, amplification and testing of biological samples can be continuously and automatically performed.

In particular, an adapter for mounting a conductive pipette, a sample tube opening/closing device, and an automatic sample analysis system according to the present invention have advantages in that it is possible to shorten the testing time and avoid the problem of contamination of a sample during a transfer process because a procedure from dispensing to testing is performed automatically and continuously without user intervention.

In addition, an adapter for mounting a conductive pipette, a sample tube opening/closing device, and an automatic sample analysis system according to the present invention have advantages in that automatic opening and dispensing are performed in a state in which a sample tube accommodating a biological sample is provided therein in a sealed state, and therefore contamination of the biological sample can be prevented.

Moreover, an adapter for mounting a conductive pipette, a sample tube opening/closing device, and an automatic sample analysis system according to the present invention have advantages in that testing can be simultaneously performed on a plurality of biological samples or multiple different types of testing can be simultaneously performed on a single biological sample.

In particular, an adapter for mounting a conductive pipette, a sample tube opening/closing device, and an automatic sample analysis system according to the present invention, are configurations that are operable independently in parallel, and thus have advantages in that the testing time can be significantly reduced by simultaneously performing three different types of testing on a single biological sample or simultaneously performing testing on a plurality of biological samples.

Furthermore, an adapter for mounting a conductive pipette, a sample tube opening/closing device, and an automatic sample analysis system according to the present invention have advantages of overcoming the spatial limitation by remedying a conventional problem that testing was possible only in a negative pressure facility due to the risk of external leakage of harmful substances during virus testing.

### BRIEF DESCRIPTION OF THE DRAWINGS

FIG 1 is a perspective view schematically showing an automatic sample analysis system according to the present invention.
FIG 2 is a plan view showing various trays inserted into the automatic sample analysis system of FIG 1.
FIG 3 is a side view showing an upper gripper, a biological sample dispensing part, and a target material dispensing part in the automatic sample analysis system of FIG 1.

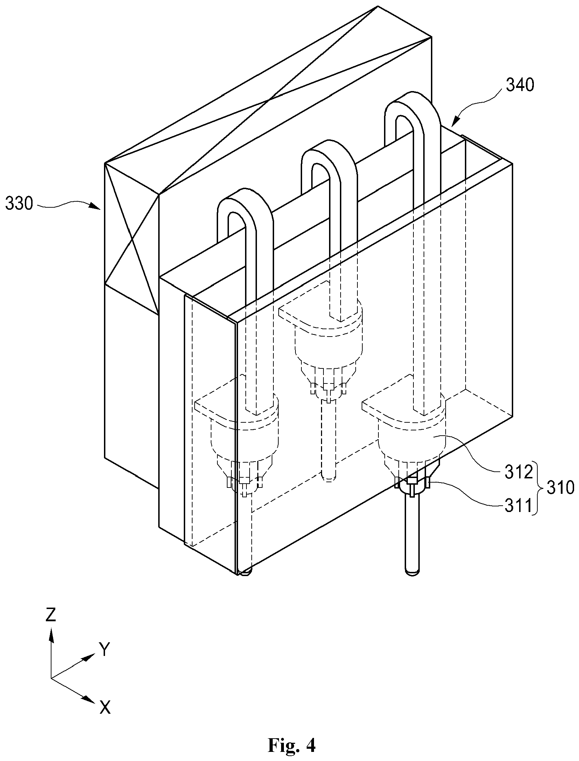

FIG 4 is a perspective view showing an upper gripper of a sample tube opening/closing device in the automatic sample analysis system of FIG 1.

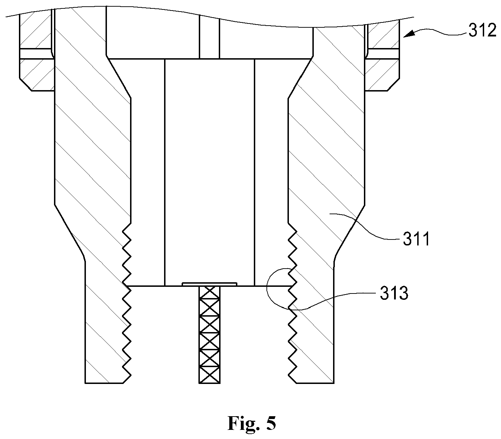

FIG 5 is an enlarged view showing a portion of the upper gripper of the sample tube opening/closing device in the automatic sample analysis system of FIG 4.

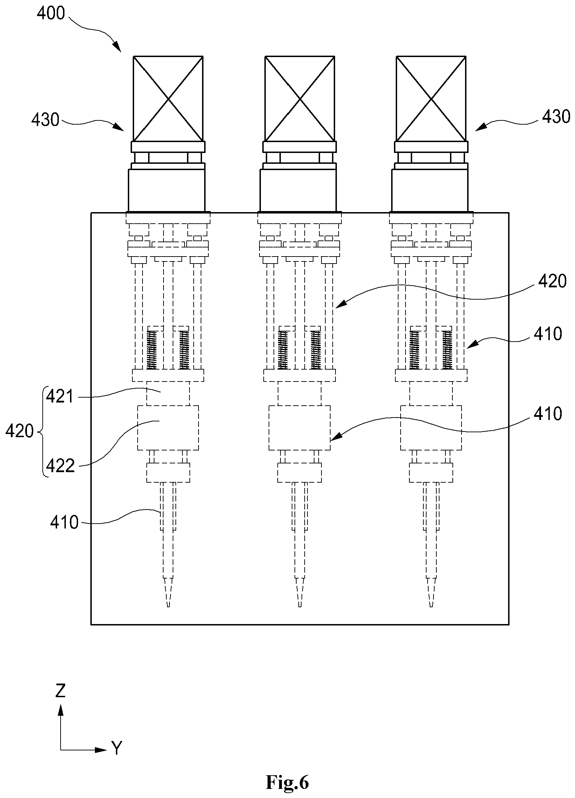

FIG 6 is a front view showing a biological sample dispensing part in the automatic sample analysis system of FIG 1.

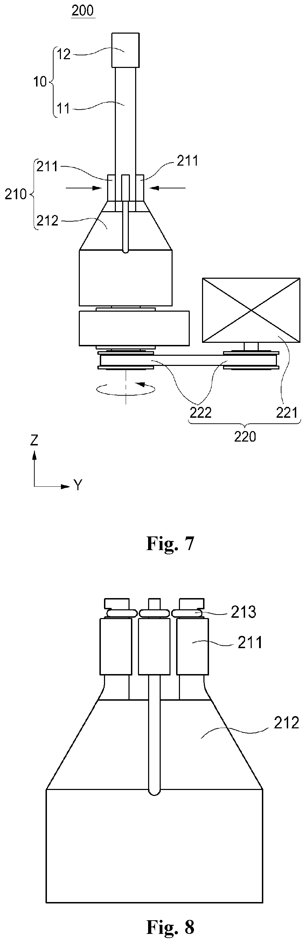

FIG 7 is a side view showing a lower gripper of the sample tube opening/closing device of the automatic sample analysis system of FIG 1.
FIG 8 is an enlarged view showing a portion of the lower gripper of the sample tube opening/closing device of the automatic sample analysis system of FIG 7.

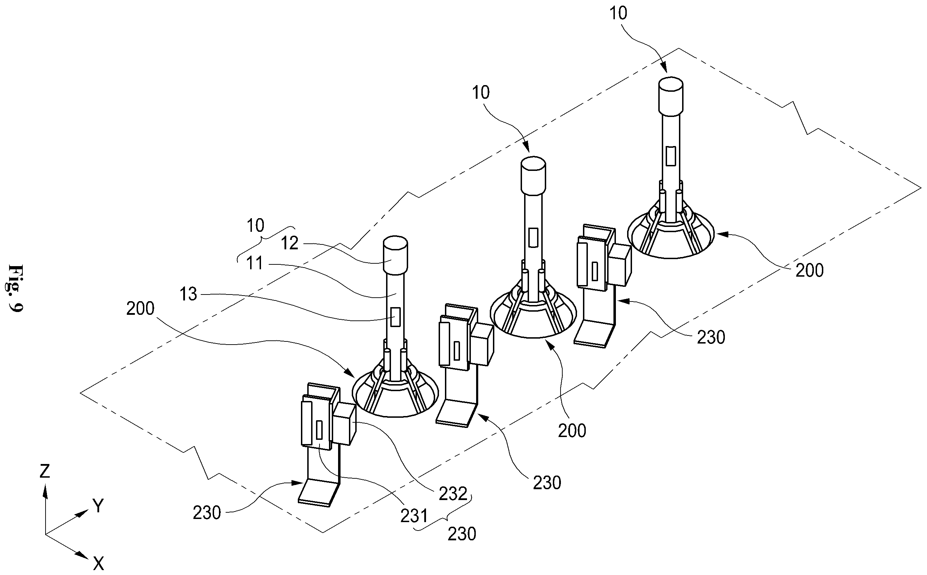

FIG 9 is a perspective view showing a lower gripper of a sample tube opening/closing device of the automatic sample analysis system of FIG 1.

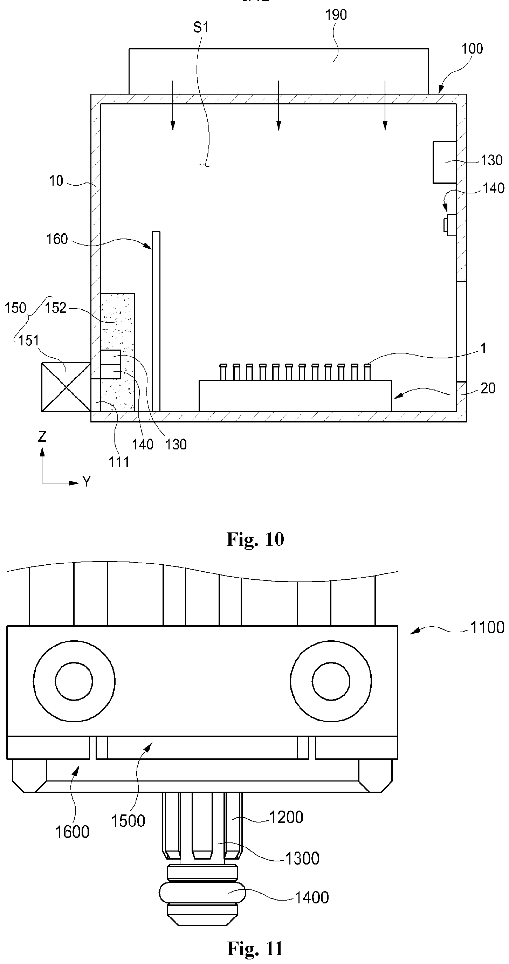

FIG 10 is a view showing a negative pressure forming part of the automatic sample analysis system of FIG 1.
FIG 11 is a view showing an adapter for mounting a conductive pipette according to the present invention.

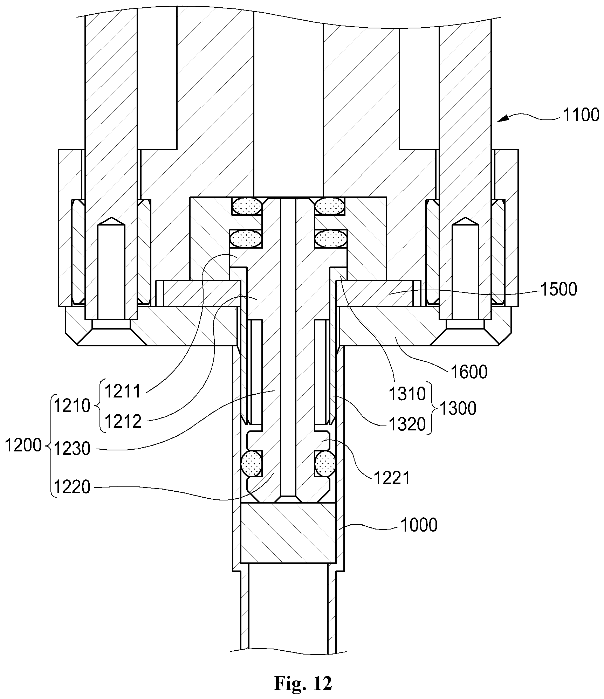

FIG 12 is a cross-sectional view showing the adapter for mounting a conductive pipette according to FIG 11.

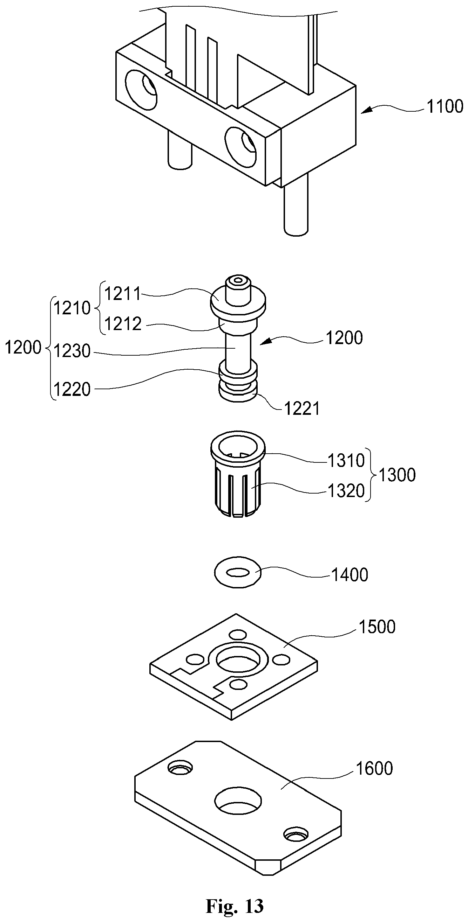

FIG 13 is an exploded perspective view showing the adapter for mounting a conductive pipette according to FIG 11.
FIG 14 is a perspective view showing a target substance transfer part in the automatic sample analysis system of FIG 1.
FIG 15 is a cross-sectional view showing a target substance transfer driving part in the automatic sample analysis system of FIG 14.

### MODE FOR CARRYING OUT THE INVENTION

Hereinafter, an adapter for mounting a conductive pipette, a sample tube opening/closing device, and an automatic sample analysis system according to the present invention will be described with reference to the accompanying drawings.

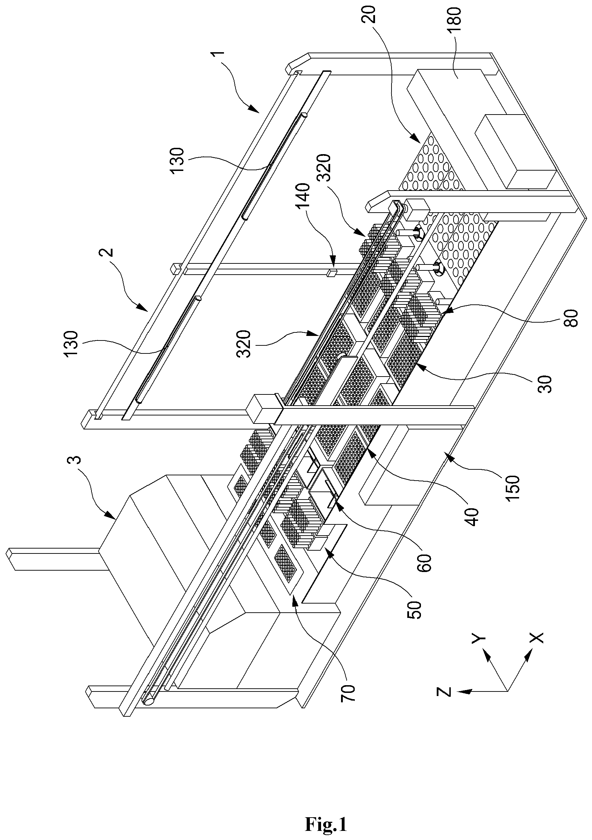

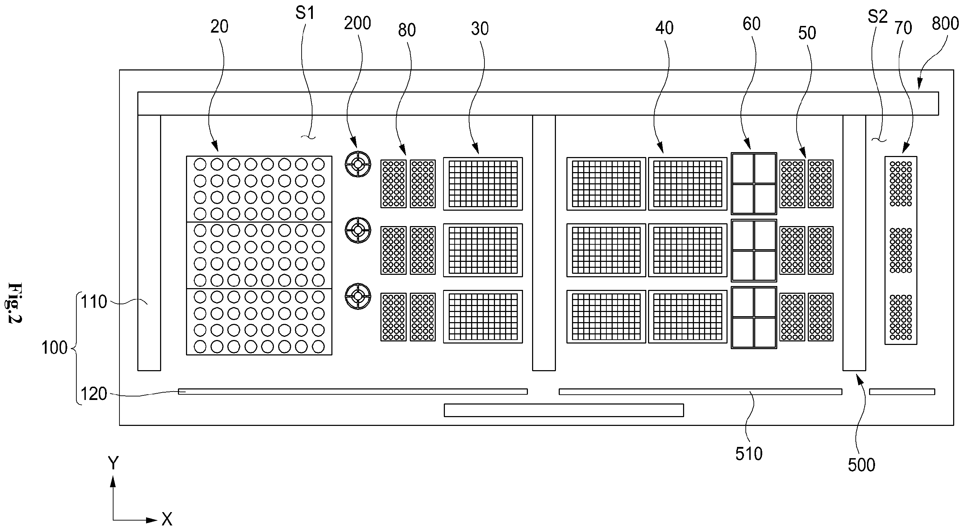

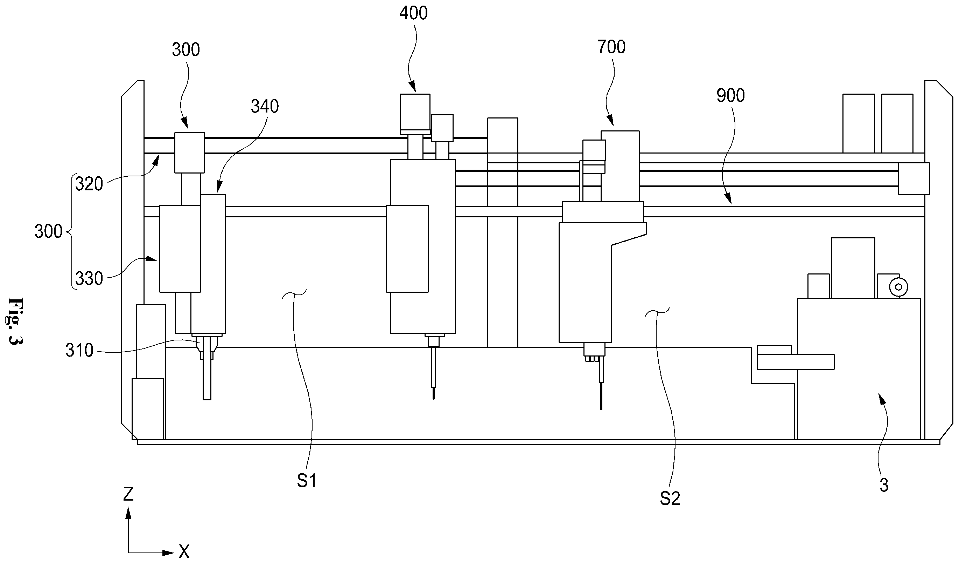

As shown in FIGS. 1 to 3, the automatic sample analysis system according to the present invention includes: a sample tube opening/closing device which automatically opens and closes a sealing member 12 of sample tubes 10 including biological samples; an automatic dispensing device 1 for dispensing biological samples from sample tubes including biological samples in a liquid form; an automatic purification and extraction device 2 for purifying and extracting a target substance from biological samples acquired from the automatic dispensing device 1; and a nucleic acid amplification testing device 3 which amplifies and measures the target substance acquired from the automatic purification and extraction device 2.

The sample tubes 10 used herein can be used without any particular limitation as long as being configured to accommodate a sample in a liquid state therein.

The automatic purification and extraction device 2 is a component that purifies and extracts a target substance from biological samples acquired from the automatic dispensing device 1, and various configurations are possible.

For example, the automatic purification and extraction device 2 may include: a second housing 500 forming a first inner space S1; an extraction part 600 provided in the second housing 500 to purify and extract target substances from biological samples transferred from the automatic dispensing device 1 to be described later; and target substance transfer parts 700 that suction target substances located at the extraction part 600 and transfers the target substance to the nucleic acid amplification testing device 3 while moving between the extraction part 600 and the nucleic acid amplification testing device 3.

The second housing 500 is configured to form a first inner space S1, and may communicate with a housing part 100 of the automatic dispensing device 1 to be described later, and more specifically, the housing part 100 may be connected to the first inner space S 1 to form the same space.

Meanwhile, in the second housing 500, a plurality of wells are formed to receive biological samples through the target substance transfer parts 700, and an extraction multi-well plate 40 to which biological samples are dispensed and which contains one or more reagents or samples for purification and extraction of a target substance may be placed in a specific row.

In addition, in the second housing 500, an extraction pipette tip rack 50 mounted to the target substance transfer parts 700 to transfer biological samples from a dispensing multi-well plate 30 to the extraction multi-well plate 40 and provided with an extraction disposable pipette tip to move a target substance extracted from the extraction multi-well plate 40 to the nucleic acid amplification testing device 3, a discarding part 60, or the like, as well as the extraction multi-well plate 40, may be further disposed in the first inner space S1.

Meanwhile, the extraction multi-well plate 40, the extraction pipette tip rack 50, and the discarding part 60 may be respectively disposed and provided at a second tray that is slidable between the first inner space S1 and an outer space.

The second housing 500 may include a second door part 510 so that the second tray is movable between the outside and the same, and through the second door part 510, the extraction multi-well plate 40, the extraction pipette tip rack 50, and the discarding part 60, which are configurations of each thereof, may move between the outside and the first inner space S1.

Meanwhile, the second housing 500 may further include an extraction part 600 for purifying and extracting target substances from biological samples dispensed into the extraction multi-well plate 40 under a position where the extraction multi-well plate 40 is disposed.

At this time, the extraction part 600 may be applied with any type of configuration previously disclosed for extracting a target substance from biological samples and, more specifically, may include a magnetic field applying part that includes a magnet to apply a magnetic field to a specific heat of the extraction multi-well plate 40, and a heating part that is formed adjacent to the magnetic field applying part and heats the same specific heat.

That is, target substances may be purified and extracted from biological samples dispensed through magnetic field application and heating.

The target substance transfer parts 700 have a configuration of suctioning a target substance located in the extraction part 600 and supplying the target substance to the nucleic acid amplification testing device 3 while moving between the extraction part 600 and the nucleic acid amplification testing device 3, and various configurations are possible.

In addition, the target substance transfer parts 700 may suction biological samples from the dispensing multi-well plate 30 and supply the biological samples to the extraction multi-well plate 40.

That is, the target substance transfer parts 700 may be equipped with a plurality of extraction pipette tips provided in the above-described extraction pipette tip rack 50 to suction a target substance dispensed from the dispensing multi-well plate 30 and supply the target substance to the extraction multi-well plate 40, and the target substance extracted through the extraction multi-well plate 40 may be supplied to the nucleic acid amplification device 3 in the same way.

At this time, three of the target substance transfer parts 700 may be provided in parallel to correspond to a multi-well plate 20 for biological samples, and may be individually driven in the X axis, Y axis, and Z axis, respectively.

Meanwhile, the target substance transfer parts 700 may include target substance transfer pipette mounting parts 710 in which a plurality of extraction pipette tips are simultaneously mounted to suction and discharge biological samples or target substances through the mounted extraction pipette tips, and target substance transfer pipette driving parts which individually drive the target substance transfer pipette mounting parts 710 in the X axis, Y axis, and Z axis, respectively;

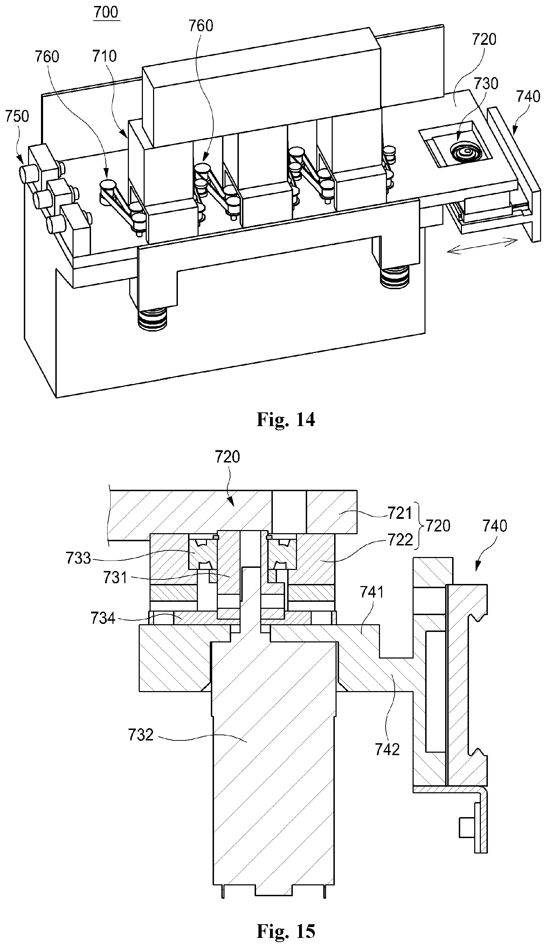

More specifically, as shown in FIGS. 14 and 15, the target substance transfer parts 700 may include a plurality of target substance transfer pipette mounting parts 710, target substance transfer plates 720 at which the target substance transfer pipette mounting parts 710 are installed, and target substance transfer driving parts 730 for driving the target substance transfer plates 720 in the left/right direction, that is, in the Y direction.

In addition, the target substance transfer parts 700 may include target substance transfer support parts 740 at which the target substance transfer driving parts 730 are installed, target substance transfer driving pulleys 750 for driving the target substance transfer parts 700 in the forward/backward direction, that is, in the X direction, and driving pulleys 760 for driving the target substance transfer pipette mounting parts 710.

A description will be made with respect to the target substance transfer plates 720 and the target substance transfer pipette mounting parts 710 through the target substance transfer driving parts 730 in the target substance transfer parts 700.

The target substance transfer plates 720 may include transfer plates 721 at which the target substance transfer pipette mounting parts 710 are installed and contact parts 722 integrally formed with the transfer plates 721 and carrying in contact with the target substance transfer driving parts 730 to be described later.

The target substance transfer driving parts 730 may include cam parts 731 for moving the target substance transfer plates 720 in the Y-direction, that is, in the left/right direction through press contact with the contact parts 722, rotation motors 732 connected to the cam parts 731 to rotate the cam parts 731, rotation bearings 733 installed at a portion of the cam parts 731, and guide moving parts 734 installed under the contact parts 722 and guiding left/right movement of the target substance transfer plates 720 by making movement through guide parts 741 to be described later.

The target substance transfer support parts 740 has a configuration installed at one side of the target substance transfer plates 720 to support the target substance transfer driving parts 730, and may include the guide parts 741 for guiding the movement of the target substance transfer plates 720 at which the above-described guide moving parts 734 are installed to be movable, and guide support parts 742 integrally formed with the guide parts 741.

The nucleic acid amplification testing device 3 is a component that amplifies and measures a target substance acquired from the automatic purification and extraction device 2, and various configurations are possible.

For example, the nucleic acid amplification testing device 3 may receive a transferred target substance from the target substance transfer parts 700, amplify the target substance, and perform testing thereon.

Meanwhile, the nucleic acid amplification testing device 3 may perform amplification and testing after receiving a transferred target substance from the target substance transfer parts 700 to a testing multi-well plate 70 in which a plurality of wells are formed.

In addition, the nucleic acid amplification testing device 3 may include a third housing 800 forming a second inner space S2, wherein the second inner space S2 formed by the third housing 800 may be formed to communicate with the first inner space S 1.

That is, the first inner space S 1, which is for dispensing of biological samples and extracts target substances from the biological samples, and the second inner space S2, which amplifies the extracted target substances and performs testing, communicate with each other to form one space, such that efficient automatic biological sample analysis is possible without user intervention.

For example, the nucleic acid amplification testing device 3 may include: a testing housing which forms a testing space isolated from the outside; and a multi-well plate insertion part into which a multi-well plate having a plurality of reaction tubes accommodating target substances extracted through the automatic purification and extraction device 2 is inserted.

At this time, the multi-well plate insertion part may include a support part for supporting an edge of the multi-well plate where the plurality of reaction tubes are provided, and a multi-well plate driving part for driving the support part between a dispensing position of the automatic purification and extraction device 3 and an amplification position in the testing housing

In addition, the testing housing may be provided with a shutter for carrying in/out of the multi-well plate insertion part.

The automatic dispensing device 1 may include biological sample dispensing parts 400 which suctions biological samples in the sample tubes 10 located in a sample tube opening/closing part and dispenses the biological samples to the dispensing multi-well plate 30, while moving between the sample tube opening/closing part, a pipette tip rack 80, and the dispensing multi-well plate 30

The biological sample dispensing parts 400 may have a configuration of suctioning biological samples in the sample tubes 10 located in lower grippers 200 and dispensing the biological samples to the dispensing multi-well plate 30, while moving between the lower grippers 200, the pipette tip rack 80, and the dispensing multi-well plate 30.

At least three of the biological sample dispensing parts 400 may be provided to be independently driven in parallel corresponding to the lower grippers 200, upper grippers 300, and the multi-well plate 20 for biological samples.

Meanwhile, the biological sample dispensing parts 400 may be individually driven in the X axis, Y axis, and Z axis independently, and each driving part may be applied identically to each driving part of the upper grippers 300 described above.

Meanwhile, the biological sample dispensing parts 400 may move in the forward/backward direction from a normal position through forward/backward direction movement guides 900 installed in first inner space S1 and second inner space S2 so as to move therethrough.

In particular, the biological sample dispensing parts 400 are configured to move biological samples from the dispensing multi-well plate 30 located in the first inner space S 1 to the extraction multi-well plate 40, and thus may reciprocate within the first inner space S1.

The dispensing pipette 410 may have a configuration of mounting disposable pipette tips from the pipette tip rack 80 to suction biological samples in the sample tubes 10 and dispense the suctioned biological samples to the dispensing multi-well plate 30.

In particular, in the dispensing pipette 410, disposable pipette tips supplied through the pipette tip rack 80 are mounted, and biological samples in the sample tubes 10 with a tube cap 12 opened while seated on a lower gripping part 310 in the mounted state may be suctioned and transferred to be dispended to the dispensing multi-well plate 30.

Meanwhile, the dispensing pipette sensor part 420 may has a configuration of adjusting suction and dispensing amounts of biological samples of the dispensing pipette 410.

For example, the dispensing pipette sensor part 420 may include a pressure sensor 421 for measuring the degree of pressure to detect clogging of the dispensing pipette 410 and, more specifically, in the process of dispensing biological samples through the pipette tips coupled to the dispensing pipette 410, the degree of pressure applied to the dispensing pipette 410 may be measured to determine whether the pipette tips are clogged and whether the dispensing is complete.

Furthermore, by measuring the pressure applied to the dispensing pipette 410 through the pressure sensor 421, the pressure for dispensing biological samples through the pipette tips may be equalized to maintain the same dispensing amount.

The dispensing pipette sensor part 420 may include a level sensor 422 level sensor 422 mounted to the dispensing pipette 410 and detecting contact of a dispensing pipette tip 411, in which the biological samples are accommodated, with the liquid surfaces of the biological samples.

In particular, the biological sample dispensing part 400 may dispense suctioned biological samples to the dispensing multi-well plate 30 by mounting disposable pipette tips from the pipette tip rack 80, and conductive pipette tips may be used in this process.

That is, the level sensor 422 may perform quantitative dispensing by sensing the liquid surface level of biological samples dispensed through the conductive pipette tips.

In addition, the biological sample dispensing part 400 may include a dispensing pipette driving part 430 that drives the dispensing pipette 410 to move from the sample tubes 10 located in the first inner space S1 to the dispensing multi-well plate 30.

At this time, the dispensing pipettes driving part 430 may be applied with the same driving scheme as the upper gripper driving part 320 described above, and may be driven through the forward/backward movement direction guides 900 for the driving guide in a process processing direction of the biological sample dispensing part 400.

Hereinafter, the sample tube opening/closing device according to the present invention will be described in detail.

As shown in FIG 1, the sample tube opening/closing device according to the present invention includes: the housing part 100 including a housing 110 forming the first inner space S1 isolated from the outside, and a door part 120 provided in the housing 110 and carrying in/out the multi-well plate 20 for biological samples, including a plurality of sample tubes 10 in which biological samples are accommodated; and a sample tube opening/closing part which is installed in the inner space away from the multi-well plate 20 for biological samples and automatically opens and closes the sample tubes 10.

At this time, the sample tube opening/closing part may include one or more lower grippers 200 for gripping a lower portion of the sample tubes 10 and one or more upper grippers 300 for gripping an upper portion of the sample tubes 10.

That is, the sample tube opening/closing part includes at least three lower grippers 200 installed in the inner space apart from the multi-well plate 20 for biological samples, receiving the transferred sample tubes 10, and gripping a lower portion of the sample tubes 10, and at least three upper grippers 300 gripping an upper portion of the sample tubes 10 and independently driven to transfer the sample tubes 10 by moving between the multi-well plate 20 for biological samples and the lower grippers (200).

Here, the biological samples, which are subject to extraction and testing, of the present invention are composed of a target substance subject to testing, and various configurations are possible.

For example, the biological samples may refer to blood, urine, tissues, saliva, sputum, etc., including target substances obtained from organisms, and may further include ground suspensions of animals and plants, culture solutions of microorganisms, and suspensions.

At this time, the target substances are target nucleic acids included in the biological samples, and the automatic sample analysis system according to the present invention may perform quantitative or qualitative testing by amplifying the target nucleic acids.

In particular, the target substances may be antigens or antibodies included in the biological samples. At this time, nucleic acids to be amplified may be nucleic acids of an antigen-nucleic acid conjugate or aptimer nucleic acids selectively attached to an antigen or antibody included in a kit.

Therefore, the automatic sample analysis system according to the present invention may simultaneously perform quantitative or qualitative testing on each of nucleic acids, antigens, and antibodies included in the biological samples.

At this time, the sample tubes 10 according to the present invention have a configuration in which biological samples extracted from a human body are accommodated, and any type of sample tubes 10 previously disclosed is applicable.

For example, the sample tubes 10 include a tube body 11 in which biological samples are accommodated and of which an upper portion is opened, and a tube cap 12 which is coupled to an upper portion of the tube body 11 through pressure and seals an upper portion of the tube body 11.

That is, the sample tubes 10 may include the tube cap 12 coupled to an upper portion of the tube body 11 to seal the biological samples accommodated in the tube body 11. At this time, the tube cap 12 may be coupled to the tube body 11 in a screw type or be in a snap type coupled through simple pressure.

Meanwhile, the multi-well plate 20 for biological samples may be composed of a plurality of rows and columns in which a plurality of sample tubes 10 are seated, so that a plurality of wells are formed.

In particular, in the multi-well plate 20 for biological samples, a total of 96 wells may be formed as three unit multi-wells in which 32 wells of 8×4 are formed, respectively, are provided in parallel.

Meanwhile, the multi-well plate 20 for biological samples, like the above-mentioned second tray, may be slidably moved in a state of being seated on the first tray to be moved between the outer space and the inner space through the door part 120 described later.

That is, the multi-well plate 20 for biological samples may be slidably moved in a state of being seated on the first tray to be moved to the inner space through the door part 120 and moved out from the inner space to the outside.

The dispensing multi-well plate 30 may have a configuration of being arranged on the side of the processing direction with reference to the lower grippers 200 described later from the multi-well plate 20 for biological samples to dispense and receive the biological samples from the sample tubes 1 through the biological sample dispensing part 400.

At this time, the dispensing multi-well plate 30 may include a plurality of multi-wells for dispensing and receiving supplied biological samples through the biological sample dispensing part 400, and a buffer part for storing other necessary reagents or samples and extra biological samples for sample testing, and may include the pipette tip rack 80 mounted to the biological sample dispensing part 400 to supply and discharge disposable pipette tips for moving biological samples.

The housing part 100 is configured to form an inner space, and various configurations are possible.

For example, the housing part 100 may include a housing 110 forming an inner space isolated from the outside, and a door part 120 provided in the housing 110 and carrying in/out of the multi-well plate 20 for biological samples, including the plurality of sample tubes 10 in which biological samples are accommodated.

In addition, the housing part 100 may include a UV lamp part 130 provided on at least one of the lower surface of the inner space or an upper portion of the door part 120 in the inner space.

Moreover, the housing part 100 may include an ozone sensor 140 installed in the inner space to detect ozone generated by the UV lamp part 130.

In addition, the housing part 100 may include a negative pressure forming part 150 for performing exhaust in one direction from the inner space to the outer space so that the inner space is maintained in a negative pressure state.

The door part 120 may have a configuration of being provided in the housing 110 for carrying in/out of the multi-well plate 20 for biological samples, including the plurality of sample tubes 10 in which biological samples are accommodated.

The door part 120 may have a hinge rotation configuration to open and close the opening of the housing 110, and allow the first tray including the above-described multi-well plate 20 for biological samples to be moved into the inner space.

The UV lamp part 130 may have a configuration of being provided on at least one of the lower surface of the inner space or an upper portion of the door part 120 in the inner space, and various configurations are possible.

For example, the UV lamp part 130 may be provided on the lower surface of the inner space and an upper portion of the door part 120, respectively, to sterilize and disinfect the multi-well plate 20 of the first tray moved in/out.

In addition, the UV lamp part 130 may be provided on at least one of the upper or lower surface of the second door part 510 of the second housing 500 as well as the inner space.

The ozone sensor 140 has a configuration of being installed in the inner space to detect ozone generated by the UV lamp part 130, and various configurations are possible.

The ozone sensor 140 may be installed adjacent to an inner wall surface, in particular, a position where the UV lamp part 130 is provided, of the housing 110 constituting the inner space to detect ozone generated.

The negative pressure forming part 150 may be configured to perform exhaust in one direction from the inner space to the outer space so that the inner space is maintained in a negative pressure state.

For example, the negative pressure forming part 150 may include a discharge fan 151 provided on one side surface of the housing part 100 to discharge air in the inner space, and an ozone filter 152 provided in front of the discharge fan 151 to filter ozone present in the inner space.

More specifically, the negative pressure forming part 150 may be provided in an exhaust port 111 formed through one side surface of the housing 110, and the exhaust fan 151 may be located at the exhaust port 111 so that air is discharged in one direction from the inner space to the outside.

The discharge fan 151 may discharge air in the inner space, the first inner space S1, and the second inner space S2 communicating therewith to form negative pressure in the inner space to be able to prevent leakage of an inner contaminated substance or a substance to be analyzed to the outside even when the first tray and the second tray are moved in and out through the opening of the door part 120 or the second door part 520.

The ozone filter 152 may be provided in front of the discharge fan 151 to filter ozone present in the inner space.

For example, the ozone filter 152 may be provided at the front side of the inner space of the discharge fan 151 to allow air exhausted from the inner space through the discharge fan 151 to pass therethrough.

Thus, the ozone filter 152 may prevent ozone generated from the UV lamp part 130 from being discharged to the outside and filter the ozone.

Meanwhile, the housing part 100 according to the present invention may further include an exhaust guide part 160 installed in the inner space to guide an air discharge path from the inner space to the outside.

The exhaust guide part 160 may be installed vertically at one side opposite to the door part 120 of the first tray and the second tray in the inner space to guide air of the first inner space S1 and the second inner space S2 towards the exhaust port 111.

In addition, the housing part 100 may include an external air suction filter 190 installed on an upper surface to form an air flow in the inner space.

At this time, the external air suction filter 190 may be installed on the upper surface of the housing 110 to induce the supply of external air to the inner space, and may be provided with a filter for filtering the passing external air.

Thus, the external air suction filter 190, together with an internal circulation fan 180 to be described later, may induce the formation of an air flow in the inner space, and induce the air flow in the inner space to be smoothly exhausted through the discharge fan 151.

Meanwhile, the housing part 100 may include the internal circulation fan 180 provided on one end surface of the inner space to induce the formation of an air flow in the inner space.

The internal circulation fan 180 may be provided on one end surface of the inner space and driven to form an air flow therein, and thus external air filtered and supplied from the outside through the external air suction filter 190 may be circulated in the inner space and induced to be exhausted toward the exhaust fan 151 described above.

The lower grippers 200 may have a configuration of being installed in the inner space apart from the multi-well plate 20 for biological samples, and gripping a lower portion of the sample tubes 10 by receiving the transferred sample tubes 10.

In particular, three of the lower grippers 200 may be provided in parallel corresponding to the above-described multi-well plate 20 for biological samples to grip each of the sample tubes 10 so that three types of testing are independently performed, respectively.

For example, the lower grippers 200 may include: a lower gripping part 210 on which the sample tubes 10 are seated and which grips a lower portion of the sample tubes 10; and a lower gripper rotation driving part 220 which rotates the lower gripping part 210 about an axis of an imaginary center line passing through the center of the sample tubes 10 in the vertical direction.

In addition, the lower grippers 200 may include an identification code recognition part 230 disposed adjacent to the lower gripping part 210 to identify the biological samples by recognizing an identification code 13.

The lower gripping part 210 may have a configuration of being disposed adjacent to the multi-well plate 20 for biological samples in the inner space so that the sample tubes 10 moving through the upper grippers 300 are seated and a lower portion of the sample tubes 10 is gripped.

For example, the lower gripping part 210 may include a plurality of lower gripping members 211 provided in a circumferential direction on the outer circumferential surface of the sample tubes 10 with reference to the seating position of the sample tubes 10, and a lower gripping member driving part 212 for driving the lower gripping members 211 so that the lower gripping members 211 move in a radial direction with reference to the seating position of the sample tubes 10.

In addition, the lower gripping part 210 may include a fixing member 213 made of rubber material and installed at the lower gripping members 211 to fix the sample tubes 10 in close contact with the gripped sample tubes 10.

That is, the lower gripping part 210 may grip a lower portion of the sample tubes 10 by horizontally moving the lower gripping members 211 in the direction of the sample tubes 10 in a state in which the sample tubes 10 are seated in the seating position.

At this time, the lower gripping member driving part 212 is applicable to any type of driving previously disclosed, and for example, the lower gripping members 211 may be linearly moved through driving using electric motors, magnetic motors, and gears, driving using pulleys and belts, and moving using electromagnetics.

The lower gripper rotation driving part 220 may be configured to rotate about an axis of an imaginary center line passing through the center of the sample tubes 10 in the vertical direction.

That is, the lower gripper rotation driving part 220 may rotate the lower gripping part 210 about an axis of a virtual center line passing through the center of the sample tubes 10 in the vertical direction to allow the sample tubes 10 to be rotated in place.

Thus, the lower gripper rotation driving part 220 may relatively rotate the tube body 11 of the sample tubes 10 with respect to the tube cap 12 gripped by the upper grippers 300 to be able to separate the tube cap 12 of the sample tubes 10 from the tube body 11.

Thus, the tube body 11 may be automatically opened from the inside, which will be described in detail below.

Meanwhile, the lower gripper rotation driving part 220 may include a lower gripper rotation driving source 221 that provides driving force according to rotation, and a pair of lower gripper rotation pulleys 222, each of which is coupled to a belt while one of which is connected to the lower gripper rotation driving source 221 and the other to the lower gripping part 210.

That is, in the lower gripper rotation driving part 220, when the lower gripper rotation driving source 221 provides rotational force to one lower gripper rotation pulley 222, the other lower gripper rotation pulley 222 connected through a belt may rotate, and the lower gripping part 210 coupled thereto may rotate.

Meanwhile, the lower grippers 200 may further include an identification code recognition part 230 for recognizing an identification code 13 for identifying the biological samples attached to and accommodated in the tube body 11.

For example, the identification code recognition part 230 is disposed adjacent to the lower gripping part 210 to identify the biological samples by recognizing the identification code 13.

At this time, the identification code recognition part 230 may include a recognition part 232 installed adjacent to the lower gripping part to irradiate light toward the identification code 13 and recognize the identification code 13 by receiving the irradiated light, and a reading part 231 installed adjacent to the recognition part 232 and reading the identification code 13 recognized through the recognition part 232.

In particular, the identification code recognition part 230 may be configured to be rotatable about the lower gripping part 210 and the seated sample tubes 10 as a central axis to make it possible to stably perform identification regardless of the position of the identification code 13 attached to the tube body 11.

Meanwhile, the identification code recognition part 230 may be fixedly installed, and in this case, when the upper grippers 300 move the sample tubes 10 from the multi-well plate 20 for biological samples, it is possible to stably recognize the identification code by aligning the positions of the sample tubes 10 to be located in the correct positions.

Any configuration is applicable to the identification code 13 as long as being identifiable through scanning, and for example, barcodes, QR codes, and the like may be applied.

The upper grippers 300 may have a configuration of being independently driven to transfer the sample tubes 10 by moving between the multi-well plate 20 for biological samples and the lower grippers 200 while gripping an upper portion of the sample tubes 10.

In particular, three of the upper grippers 300 may be provided in parallel corresponding to the above-described multi-well plate 20 for biological samples and the lower grippers 200 to be independently driven.

In particular, the upper grippers 300 may be linearly moved in the X, Y, and Z directions, respectively, and each of the three upper grippers 300 may be individually driven independently.

For example, the upper grippers 300 may include: an upper gripping part 310 for gripping an upper portion of the sample tubes 10; an upper gripper forward/backward driving part 320 for moving the upper gripping part 310 in the forward/backward direction, which is a process processing direction; an upper gripper left/right driving part 330 for moving the upper gripping part 310 in the left/right direction with respect to the process processing direction; and an upper gripper upward/downward driving part 340 for moving the upper gripping part 310 in the upward/downward direction;

The upper gripping part 310 may be configured to grip an upper portion of the sample tubes 10.

For example, the upper gripping part 310 may include a plurality of upper gripping members 311 for gripping the tube body 11 or the tube cap 12 in the sample tubes 10 and provided at positions corresponding to the outer circumferential surfaces of the sample tubes 10 centered on the sample tubes 10 in the same manner as the lower gripping members 211 described above, and an upper gripping member driving part 312 for driving the upper gripping members 311 in the radial direction of the sample tubes 10.

At this time, the upper gripping member 311 may stably grip the sample tubes 10 by forming a friction part 313 on the contact surface of the sample tubes 10.

More specifically, the upper gripping part 310 is provided in each of positions corresponding to the outer circumferential surfaces of the sample tubes 1 to grip the sample tubes 10 through radial movement in a state adjacent to the sample tubes 10.

Like the lower gripping member driving part 212 described above, the upper gripping member driving part 312 may horizontally move the upper gripping member 311 through various conventionally disclosed methods to grip the sample tubes 10 or release the gripping of the sample tubes 10.

The upper gripper forward/backward driving part 320 may be configured to move the upper gripping part 310 in the forward/backward direction, which is a process processing direction.

The upper gripper forward/backward driving part 320 may drive the upper gripping part 310 in the forward/backward direction through a belt connected to the upper gripping part 310 and a pair of upper gripper forward/backward driving pulleys connected through the belt.

In addition, the upper gripper forward/backward driving part 320 may be driven in the forward/backward direction from a normal position through the forward/backward direction movement guides 900 installed in the first inner space S1 and the second inner space S2 so that the upper gripping part 310 moves therethrough.

The upper gripper left/right driving part 330 may be configured to move the upper gripping part 310 in the left/right direction with respect to the process processing direction.

At this time, the upper gripper left/right driving part 330, as described above, may be a pair of pulleys and belts connected to the upper gripping part 310, and as another example, may be driven left/right through a rotation screw.

The upper gripper upward/downward driving part 340 may be configured to move the upper gripping part 310 in the upward/downward direction, and may be driven using the above-described pulley and belt or, as another example, through a rotation screw.

Meanwhile, opening of the sample tubes 10 through the above-described upper grippers 300 and lower grippers 200 will be described below.

As described above, in the sample tubes 10, the tube cap 12 may be coupled to the tube body 11 in a screw type or be in a snap type coupled through simple pressure.

Meanwhile, when the tube cap 12 is configured to be rotated and coupled to the tube body 11 in a screw type, a lower portion of the tube body 11 seated thereon may be gripped through the lower gripping part 210 in a state in which the tube cap 12 is gripped through the upper gripping part 310.

At this time, when rotating the entire lower gripping part 210 including the sample tubes 10 seated through the lower gripper rotation driving part 220, the tube cap 12 may rotate relative to the tube body 11 because the tube cap 12 is gripped by the upper gripping part 310. As a result, the tube cap 12 may be separated from the tube body 11.

Meanwhile, of course, it is also possible to open the tube cap 12 by rotating the upper gripping part 310 through the lower gripping part 210 in a state of fixing and gripping the tube body 11.

Meanwhile, in the case of a configuration in which the tube cap 12 is coupled to the tube body 11 by a simple pressure scheme, the tube cap 12 may be opened by moving the upper gripping part 310 upward or by moving the lower gripping part 210 downward in a state in which the tube cap 12 is gripped through the upper gripping part 310 and a lower portion of the tube body 11 is gripped through the lower gripping part 210, as described above.

Hereinafter, an adapter for mounting a conductive pipette according to the present invention will be described.

Meanwhile, the adapter for mounting a conductive pipette described below may be applied to various configurations for mounting a conductive pipette in the automatic sample analysis system and, more specifically, may be installed at the biological sample dispensing part 400 to induce a stable and easy installation of the conductive pipette tip.

The adapter for mounting a conductive pipette, which is for connecting a conductive pipette tip 1000 to a pipette device 1100, includes: a cylinder body 1200 coupled to the pipette device 1100; and a columnar plate spring part 1300 which is coupled to the outer circumferential surface of the cylinder body 1200 and to which the conductive pipette tip 1000 is fitted and coupled.

The pipette device 1100 may have a configuration in which the conductive pipette tip 1000 is coupled to move or dispense a solution accommodated in the conductive pipette tip 100.

At this time, the pipette device 1100 may have a conductive element capable of checking whether the conductive pipette tip 1000 is coupled, and for example, may be provided with a PCB part 1500 to be described later to be energized.

The cylinder body 1200 has a configuration of being installed by being coupled to the pipette device 1100, and various configurations are possible.

For example, the cylinder body 1200 may include an upper coupling part 1210 inserted into and coupled to the pipette device 1100, a lower coupling part 1220 exposed to the outside and connected to the conductive pipette tip 1000, and a central part 1230 connected between the upper coupling part 1210 and the lower coupling part 1220 and formed to have a smaller radius than the upper coupling part 1210 and the lower coupling part 1220.

At this time, the upper coupling part 1210 may include a first upper stepped part 1211 formed at the upper end thereof and a second upper stepped part 1212 extending from the lower side of the first upper stepped part 1211 and formed to have a smaller radius than the first upper stepped part 1211.

The lower coupling part 1220 may include a plurality of lower stepped parts 1221 formed spaced apart from each other at regular intervals.

The plate spring part 1300 may have a columnar configuration of being coupled to the outer circumferential surface of the cylinder body 1200 and allowing the conductive pipette tip 1000 to be fitted thereinto and coupled thereto.

For example, the plate spring part 1300 may include an annular part 1310 coupled to the upper coupling part 1210 side and a plurality of blade parts 1320 having elasticity and provided downward along the annular part 1310.

In addition, in the plate spring part 1300, the annular part 1310 may be installed on the outer circumferential surface of the second upper stepped part 1212 so that deformation caused by elasticity according to the coupling of the conductive pipette tip 1000 is possible, as the blade parts 1320 are installed spaced apart from the outer circumferential surface of the central part 1230.

Thus, the plate spring part 1300 may induce the conductive pipette tip 1000 to be elastically in close contact with a position where the blade parts 1320 are installed so that stable coupling is possible.

In addition, one end of the plate spring part 1300 may have one end in contact with the PCB part 1500 installed in the pipette device 1100 to check energization, and the other end connected to the conductive pipette tip 1000.

Meanwhile, the cylinder body 1200 and the plate spring part 1300 may be formed of metal and conductive polymers.

In addition, the adapter for mounting a conductive pipette may further include an elastic member 1400 installed at the lower stepped parts 1221 to prevent leakage of a solution in the conductive pipette tip 1000.

At this time, the elastic member 1400 may be installed at the outer diameter of the lower stepped parts 1221 and in close contact with the inner diameter of the conductive pipette tip 1000, thereby preventing a solution contained in the conductive pipette tip 1000 from leaking.

In addition, of course, the elastic member 1400 may be additionally provided at the upper stepped part 1211.

In addition, the adapter for mounting a conductive pipette may further include an adapter plate 1600 bolted to the lower end of the pipette device 1100 to easily remove the conductive pipette tip 1000 from the pipette device 1100.

The adapter plate 1600 may be bolted to the lower end of the pipette device 1100, and induce the conductive pipette tip 1000 to be removed together when the adapter plate 1600 is removed in a state in which the upper end of the conductive pipette tip 1000 is interfered therewith.

The above has only been described with respect to some of the preferred embodiments that can be implemented by the present invention. Thus, as noted, the scope of the present invention should not be construed as being limited to the above examples, and it will be said that all the technical ideas of the present invention described above and the technical ideas that are fundamental together are included in the scope of the present invention.

## Claims

1. A sample tube opening/closing device comprising:
a housing 110 that forms an inner space isolated from the outside and includes a door 120 for carrying in/out a multi-well plate 20 for biological samples, including a plurality of sample tubes 10 in which biological samples are accommodated; and
a sample tube opening/closing part that is installed in the inner space to be spaced apart from the multi-well plate 20 for biological samples and automatically opens and closes the sample tubes 10.

2. The sample tube opening/closing device of claim 1, wherein the sample tube opening/closing part comprises:
one or more lower grippers 200 for gripping a lower portion of the sample tubes 10; and
one or more upper grippers 300 for gripping an upper portion of the sample tubes 10.

3. The sample tube opening/closing device of claim 2, wherein three of the lower grippers 200 and three of the upper grippers 300 are provided corresponding to each other in parallel so that three of the sample tubes 10 are simultaneously opened or closed.

4. The sample tube opening/closing device of claim 3, wherein the upper grippers 300 are each independently linearly movable in an X direction, a Y direction, or a Z direction.

5. The sample tube opening/closing device of claim 4, wherein the upper grippers 300 comprise:
an upper gripping part 310 for gripping an upper portion of the sample tubes 10;
an upper gripper forward/backward driving part 320 for moving the upper gripping part 310 in the forward/backward direction, which is a process processing direction;
an upper gripper left/right driving part 330 for moving the upper gripping part 310 in the left/right direction with respect to the process processing direction; and
an upper gripper upward/downward driving part 340 for moving the upper gripping part 310 in the upward/downward direction.

6. The sample tube opening/closing device of claim 2, wherein, in a state in which the lower grippers 300 grip a lower portion of the sample tubes 10, the upper grippers 200 grip and lift a sealing member 12 sealing the sample tubes 10, thereby opening the sample tubes 10.

7. The sample tube opening/closing device of claim 2, wherein, in a state in which the upper grippers 200 grip the sealing member 12 sealing the sample tubes 10 and the lower grippers 300 grip a lower portion of the sample tubes 10, the sample tubes 10 are opened through relative rotation of the upper grippers 200 and the lower grippers 300.

8. The sample tube opening/closing device of claim 2, wherein the lower grippers 200 comprise:
a lower gripping part 210 on which the sample tubes 10 are seated and which grips a lower portion of the sample tubes 10; and
a lower gripper rotation driving part 220 which rotates the lower gripping part 210 about an axis of an imaginary center line passing through the center of the sample tubes 10 in the vertical direction.

9. The sample tube opening/closing device of claim 8, wherein the lower grippers 200 comprise an identification code recognition part 230 disposed adjacent to the lower gripping part 210 and identifying the biological samples by recognizing an identification code 13 attached to the sample tubes 10.

10. The sample tube opening/closing device of claim 1, wherein the housing 110 comprises a UV lamp part 130 provided on at least one of the lower surface of the inner space S and an upper portion of the door 120.

11. The sample tube opening/closing device of claim 10, wherein the housing 110 comprises an ozone sensor 140 installed in the inner space S to detect ozone generated by the UV lamp part 130.

12. The sample tube opening/closing device of claim 1, wherein the housing 110 comprises a negative pressure forming part 150 for performing exhaust in one direction from the inner space S to an outer space so that the inner space S is maintained in a negative pressure state.

13. The sample tube opening/closing device of claim 12, wherein the negative pressure forming part 150 comprises:
a discharge fan 151 provided on one side surface of the housing 110 to discharge air from the inner space S; and
an ozone filter 152 provided in front of the discharge fan 151 to filter ozone present in the inner space S.

14. An automatic sample analysis system comprising:
a sample tube opening/closing device, according to any one of claims 1 to 13, for automatically opening and closing a sealing member 12 of sample tubes 10 including biological samples;
a dispensing device 1 for dispensing the biological samples from the sample tubes 10;
an automatic purification and extraction device 2 for purifying and extracting a target substance from the biological samples acquired from the dispensing device 1; and
a nucleic acid amplification testing device 3 for amplifying and measuring the target substance acquired from the automatic purification and extraction device 2.

15. The automatic sample analysis system of claim 14, wherein the sample tube opening/closing device, the dispensing device 1, and the automatic purification and extraction device 2 form a first inner space S1 isolated from the outside,
the nucleic acid amplification testing device 3 forms a second inner space S2 isolated from the outside, and
the first inner space S1 and the second inner space S2 are in communication with each other.

16. The automatic sample analysis system of claim 14, wherein the target substance is a target nucleic acid included in the biological samples, and quantitative or qualitative testing is performed by amplifying the target nucleic acid.

17. The automatic sample analysis system of claim 16, wherein the target nucleic acid is a nucleic acid of an antigen-nucleic acid conjugate or an aptamer nucleic acid, which is, among an antigen or antibody included in the biological samples, selectively attached to the antigen or antibody.

18. The automatic sample analysis system of claim 14, wherein quantitative or qualitative testing is simultaneously performed on each of a nucleic acid, antigen, and antibody included in the biological samples.

19. The automatic sample analysis system of claim 14, wherein the dispensing device 1, the automatic purification and extraction device 2, and the nucleic acid amplification testing device 3 are respectively provided with doors that are separated and distinguished from each other.

20. The automatic sample analysis system of claim 14, wherein the dispensing device 1 comprises a biological sample dispensing part 400 which suctions biological samples in the sample tubes 10 located in a sample tube opening/closing part and dispenses the biological samples to a dispensing multi-well plate 30, while moving between the sample tube opening/closing part, a pipette tip rack 80, and the dispensing multi-well plate 30.

21. The automatic sample analysis system of claim 20, wherein the biological sample dispensing part 400 comprises:
a dispensing pipette 410 for suctioning the biological samples in the sample tubes 10 and dispensing the suctioned biological samples to the dispensing multi-well plate 30;
a dispensing pipette sensor part 420 for controlling the suction and dispensing amounts of the biological samples by the dispensing pipette 410; and
a dispensing pipette driving part 430 for driving the dispensing pipette 410 to move between the dispensing multi-well plate 30 and the sample tubes 10 located in the first inner space.

22. The automatic sample analysis system of claim 21, wherein the dispensing pipette sensor part 420 comprises a pressure sensor 421 for measuring the degree of pressure to detect clogging of the dispensing pipette 410.

23. The automatic sample analysis system of claim 21, wherein the dispensing pipette sensor part 420 comprises a level sensor 422 mounted to the dispensing pipette 410 and detecting contact of a dispensing pipette tip 411, in which the biological samples are accommodated, with the liquid surfaces of the biological samples.

24. The automatic sample analysis system of claim 14, wherein the nucleic acid amplification testing device 3 comprises:
a testing housing which forms a testing space isolated from the outside; and
a multi-well plate insertion part into which a multi-well plate having a plurality of reaction tubes accommodating target substances extracted through the automatic purification and extraction device 2 is inserted.

25. The automatic sample analysis system of claim 24, wherein the multi-well plate insertion part comprises a support part for supporting an edge of the multi-well plate where the plurality of reaction tubes are provided, and a multi-well plate driving part for driving the support part between a dispensing position of the automatic purification and extraction device 3 and an amplification position in the testing housing.

26. The automatic sample analysis system of claim 24, wherein the testing housing is provided with a shutter for carrying in/out the multi-well plate insertion part.

27. An adapter which is for mounting a conductive pipette, and is for connecting a conductive pipette tip 1000 to a pipette device 1100, the adapter comprising:
a cylinder body 1200 coupled to the pipette device 1100; and
a columnar plate spring part 1300 which is coupled to the outer circumferential surface of the cylinder body 1200 and to which the conductive pipette tip 1000 is fitted and coupled.

28. The adapter of claim 27, wherein the cylinder body 1200 and the plate spring part 1300 are formed of metal and conductive polymers.

29. The adapter of claim 27, wherein the cylinder body 1200 comprises an upper coupling part 1210 inserted into and coupled to the pipette device 1100, a lower coupling part 1220 exposed to the outside and connected to the conductive pipette tip 1000, and a central part 1230 connected between the upper coupling part 1210 and the lower coupling part 1220 and formed to have a smaller radius than the upper coupling part 1210 and the lower coupling part 1220.

30. The adapter of claim 29, wherein the upper coupling part 1210 comprises a first upper stepped part 1211 formed at the upper end thereof, and a second upper stepped part 1212 extending from the lower side of the first upper stepped part 1211 and formed to have a smaller radius than the first upper stepped part 1211.

31. The adapter of claim 29, wherein the lower coupling part 1220 comprises a plurality of lower stepped parts 1221 formed spaced apart from each other at regular intervals.

32. The adapter of claim 31, further comprising an elastic member 1400 installed at the lower stepped parts 1221 to prevent leakage of a solution in the conductive pipette tip 1000.

33. The adapter of claim 30, wherein the plate spring part 1300 comprises an annular part 1310 coupled to the upper coupling part 1210 side and a plurality of blade parts 1320 having elasticity and provided downward along the annular part 1310.

34. The adapter of claim 33, wherein, in the plate spring part 1300, the annular part 1310 is installed on the outer circumferential surface of the second upper stepped part 1212 so that deformation caused by elasticity according to the coupling of the conductive pipette tip 1000 is possible, as the blade parts 1320 are installed spaced apart from the outer circumferential surface of the central part 1230.

35. The adapter of claim 27, wherein the plate spring part 1300 has one end in contact with a PCB part 1500 installed in the pipette device 1100 to check energization, and the other end connected to the conductive pipette tip 1000.
